# EUROPEAN PATENT SPECIFICATION

(11) **EP 2 379 932 B1**
(45) Date of publication and mention of the grant of the patent: **15.08.2018**
(21) Application number: 09806183.1
(22) Date of filing: 21.12.2009
(51) Int. Cl.: F16L 55/165

(54) **METHOD OF LINING A PIPE**
VERFAHREN ZUR ROHRAUSKLEIDUNG
METHODE DE CHEMISAGE DE CONDUITE

(30) Priority: 19.12.2008 GB 0823174; 30.07.2009 GB 0913281
(43) Date of publication of application: 26.10.2011
(73) Proprietor: Sanders, Simon, Wiltshire SP1 2QP (GB)
(72) Inventor: Sanders, Simon, Wiltshire SP1 2QP (GB)
(74) Representative: Chapman IP
(86) International application number: PCT/GB2009/002922
(87) International publication number: WO 2010/070299

(56) References cited:
- US-A- 5 964 249
- US-A1- 2008 169 036
- US-B1- 6 199 591

## Description

This invention relates to installing pipe-liners in pipes and provides an extender-tube attached to a pipe-liner, together with a launch chamber, a closure-sleeve, a pressure-tube, a loader-packer and a suction valve as ancillary materials and equipment for use with or separately from an extender-tube for carrying out such installations, and it relates in particular to installing cured-in-place pipe-liners (CIPP liners) in drains.

A commonly-used method for repairing defective pipes such as drains is to insert a pipe-liner, hereinafter referred to as a liner, that comprises a combination of materials, construction and method of use such that it is flexible whilst being inserted and becomes rigid or may be caused to become rigid after being positioned in the pipe being lined. The most common type of liner is the CIPP liner consisting of a tube of a flexible carrier material such as felt impregnated with a liquid material such as resin which hardens or may be caused to harden following insertion of the liner into the pipe. The external surface of the tube of carrier material is usually substantially impermeable such impermeability being usually achieved by means of a flexible skin of a substantially impermeable material such as a plastic. One method for inserting a liner is to evert it into position within a pipe, so that it turns inside-out and what was previously the external surface forms the inner surface of the liner. Eversion is usually achieved by positioning the end of the liner so that it passes through a nozzle and is turned back over and fastened in place round the nozzle so that, when fluid such as air or water is introduced under pressure through the nozzle, the liner may be caused to turn inside out or evert so that it is drawn through and extends progressively beyond the nozzle. The everting end of the liner may be inserted in the end of a pipe and the continuing application of fluid under pressure causes the liner to evert and extend into the pipe. The nozzle is usually incorporated into a chamber that may be pressurised with a pressurising fluid or into the end of a vertical tube that may be filled with a liquid such as water and the liner is partly or wholly contained within the chamber or tube prior to eversion. Once the liner is fully inserted it is held in position either by maintaining pressure within it, which requires provision for the distal end of the liner to be closed to retain the pressurising fluid, or by means of a length of pressurisable tubing, commonly called inversion hose, which may be inserted at the same time as the liner or separately everted into the liner after the liner has been put into position in the pipe.

US 5,694,249 A discloses an apparatus for repairing a pipeline.

US 2008/169036 A1 discloses a tubular resin absorbing material impregnated with a setting resin for ling pipes.

The invention is set out in the appended claims.

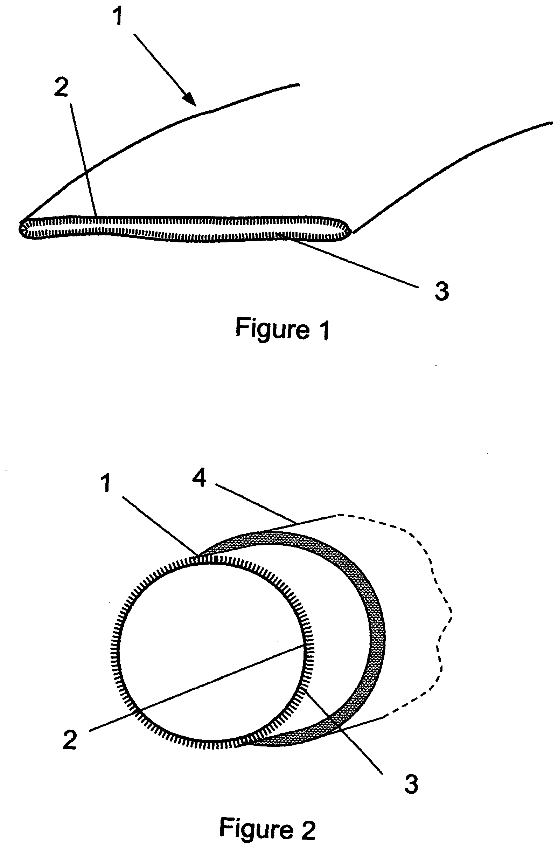

An example of a liner is shown in figures 1 and 2. Figure 1 depicts the end of a liner 1 in "lay-flat" mode as it exists before being everted. An impervious surface hereinafter referred to as the skin 2 forms the exterior of the liner and the body material 3, which is depicted by a line of bars, forms the bulk of the liner. The commonest form of liner used for lining drains consists of a tube of felt or other flexible absorbent material enclosed in a flexible skin of a plastic such as polyvinyl chloride or polyurethane, impregnated with resin.

Figure 2 shows a liner 1 that has been everted through and has emerged out of a pipe 4. The skin 2 of the liner now forms the inner surface of the liner and the body material 3 forms the exposed exterior of the liner and is in contact with the inner surface of the pipe.

The commonest form of pressurisable chamber used for everting a liner is called an inversion-drum and consists of a reel on which the liner is mounted, enclosed within a pressurisable chamber fitted with an outlet nozzle. There are alternative forms of pressurisable chamber which are loaded by stuffing or folding the liner wholly or partly into them, which are designed then to be closed with a substantially air-tight closure. In all types of pressurisable chamber, the end of the liner passes through the nozzle to the outside of the pressurisable chamber and is everted and fastened round the nozzle with a firm air-tight fastening. When compressed air is applied to the pressurisable chamber the liner is forced to evert progressively and extend out of the pressurisable chamber and the everting end may be directed into the pipe being lined.

The most widely-used inversion-drums are bulky and expensive and usually require two or more people to handle them. Smaller versions are available but their use is limited to shorter liners and they are also fairly expensive, as is a liner-gun consisting of a chamber into which a liner may be wholly or partly stuffed which is then closed and sealed and pressurised. Some users make their own pressurisable chambers out of a length of tube fitted with a nozzle at one end and closed at the other, but these can be difficult to load.

When a liner is being everted from an inversion drum at ground level into a drain that runs horizontally underground, part of the section of liner between the inversion drum and the drain usually has to take the form of at least one bend or curve and the nature of the material and construction of the liner usually causes creasing and constriction that hinder the movement of the uneverted part of the liner through the said section of liner between the inversion drum and the drain.

There are also disadvantages with the method of everting a liner by means of a vertical tube filled with water. First, the necessary water supply may not always be readily available. Second, it is often necessary to erect a scaffold platform to support a vertical pipe long enough to deliver the pressure required to drive a liner into a pipe. Third, if the pipe being lined slopes significantly upwards from the point of access, water pressure is progressively reduced at the everting end as it extends, and if it slopes significantly downwards, the weight of water can be too great for the installer or the lining material itself to support. And, fourth, if the eversion process is held up for any reason, it is not possible to raise the operating pressure as a way to get it moving again.

There are further difficulties and shortcomings that are common to all of these conventional methods for inserting liners into drains. In the first instance, an everted liner must extend from the point of access to the pipe being lined and cannot be caused to start at a chosen point within a pipe such as beyond a junction where two pipes join. It is possible to make a short localised repair of up to approximately 2 metres length, by means of a glass-fibre and resin patch which is wrapped round a semi-rigid bladder called a packer and dragged or pushed into position within a pipe where the packer is pressurised to press and form the patch against the inner surface of the pipe and is deflated and withdrawn when the resin is cured. However, if the defect is longer than 2 metres or so, several separate patches must be applied or, if a liner is used, holes must be cut in it, both of which increase time and cost. Second, part of the cured liner will always project out of the access end of the pipe being lined and any excess must be trimmed and spillage and contamination must be removed. Third, existing methods for pressurising an everted liner can involve difficulty and cost. It can be pressurised by closing it at the distal end by, for example, binding it or applying a stopper, but this method can only be used on manhole-to-manhole liners and the end section must be trimmed and the manhole must be made good when the job is finished. Alternatively, a length of inversion hose may be everted simultaneously with the liner, which is a complicated task requiring the operator to thread the liner into the tube beforehand, or it may be dragged in by the liner as it everts which, again, can be complicated or unreliable using existing methods, or it may be inserted into the liner after the liner has been positioned within the pipe being lined, which usually requires that the inversion hose is separately everted into the liner.

An alternative to inverting a liner into a pipe such as a drain is to drag or push it into place and then to pressurise it with a separate pressurisable tube which is usually everted into the liner after the liner has been dragged into place. This can overcome some of the problems associated with conventional eversion methods but carries the major disadvantage that the liner cannot be caused to adhere to the inner surface of the pipe and consequently water or other fluid can enter between the pipe and the liner, potentially contravening the standards for resisting groundwater ingress required by the UK water industry. Grouting the ends of the liner against the pipe can prevent fluid getting into the drainage system provided that the liner runs uninterrupted between two access manholes but if access to the liner is from one manhole only (called a "blind-shot"), a separate patch will be required over the distal end, adding cost and reducing the diameter of the repaired pipe. Also, it can be difficult and often impossible to install a standards-compliant liner at locations where pipes branch or converge.

The invention provides a set of methods and configurations of materials, fixtures and equipment which, severally and collectively address these difficulties with and shortcomings of the existing methods for inserting liners into pipes. They are intended in particular for the purpose of lining drains, thereby providing an economic and practical means for repairing defective drains without digging them up and replacing them. The invention may also be applied in other situations where it is required to insert a tubular liner of a material or combination of materials that is initially flexible into a pipe and where the liner subsequently hardens or is caused to adhere to the inner surface of the pipe. The invention is set out in the appended claims.

In this description there are described parts provided by examples of the invention that are of elongated form and are extended or otherwise moved from an initial position as part of the processes and methods of the invention. Unless the context indicates otherwise, reference to the distal end of any such part relates to the end which, when the part is fully extended or moved, will have moved furthest from the initial position and reference to the proximal end relates to the other end of the part. Reference to the everting end of a part and to the point of eversion relates to the point where an incompletely everted tubular part is turning out and becoming everted and reference to pressurising fluid relates to a fluid such as air or water that is introduced under pressure into a cavity or void such as a tube or a pressurisable chamber or is pressurised when within such cavity or void. Unless otherwise stated and where appropriate to the context or function, any connection that is made between a part that is tubular in shape and an aperture or nozzle or other part that is tubular in shape is made around the circumferences of the items that are connected and is substantially leak-proof and where appropriate to the context or function is flexible and of a form that permits the connected parts to be everted.

In this description, reference to a liner relates to a tube of the basic liner material, including but not limited to a tube of a flexible carrier material such as felt, prior to preparation for use by, for example, impregnation with resin, or such reference relates to a fully-prepared liner in flexible or hardened form, as appropriate to the context.

The principal part of the invention provides a tube of a flexible impermeable material such as a plastic or a plastic-coated fabric hereinafter called an extender-tube. The extender-tube is connected to an evertable liner so that the combined extender-tube and liner, together with the connection between them, form a single continuous evertable tube hereinafter referred to as an extended liner. The method of connection may be direct, for example by an overlapping joint, or may be by means of an intermediate connector of a form that includes but is not limited to a connector-sleeve of a flexible, substantially impermeable material or construction which may also be elastic.

The invention provides a method whereby the extended liner is everted progressively in a manner such that the extender-tube is first to evert, followed by the liner. The method is described as follows, with reference to the accompanying drawings. The everting end of the extended liner may be directed into the end of a pipe and the remaining part of the extended liner may be everted fully into the pipe. The lengths of the extender-tube and the liner may be chosen so that the liner may be caused to be accurately positioned within the pipe with one or both of the the ends of the liner placed at predetermined positions including for example at the commencement of the pipe or at a point beyond a junction where there is a branching or convergence of pipes. Means are provided for separating the extender-tube from the liner when the liner is in position and for removing it thereby eliminating the requirement for trimming the liner at the proximal end. Methods of separation include but are not limited to peeling or snapping or otherwise breaking off the extender-tube and any connector, releasing by dissolving or washing away or heating the connection or any adhesive or sealant, and mechanical destruction. The interior surface of the extender-tube may be marked with a scale or other indicator which is progressively revealed as the extender-tube is everted for purposes that include but are not limited to indicating the length of extender-tube that remains to be everted before the join between the extender-tube and the liner reaches the point of eversion, thereby guiding the user in positioning the liner within the pipe.

In order to facilitate the movement of the uneverted part of the extended liner through the part of the extended liner that comprises the extender-tube, particularly the section of the said extender-tube that extends from the proximal end to the point where it enters the pipe being lined, and particularly where that said section of the extender-tube is formed into a curve or bend, the circumference of the said extender-tube is preferably greater than the external circumference of the liner to which it is attached and the extender-tube or the connector-sleeve, or both, may be tapered over all or part of their lengths so that the circumferences of the liner and the extender-tube and the connector-sleeve, if used, are compatible at the point or points where they are connected.

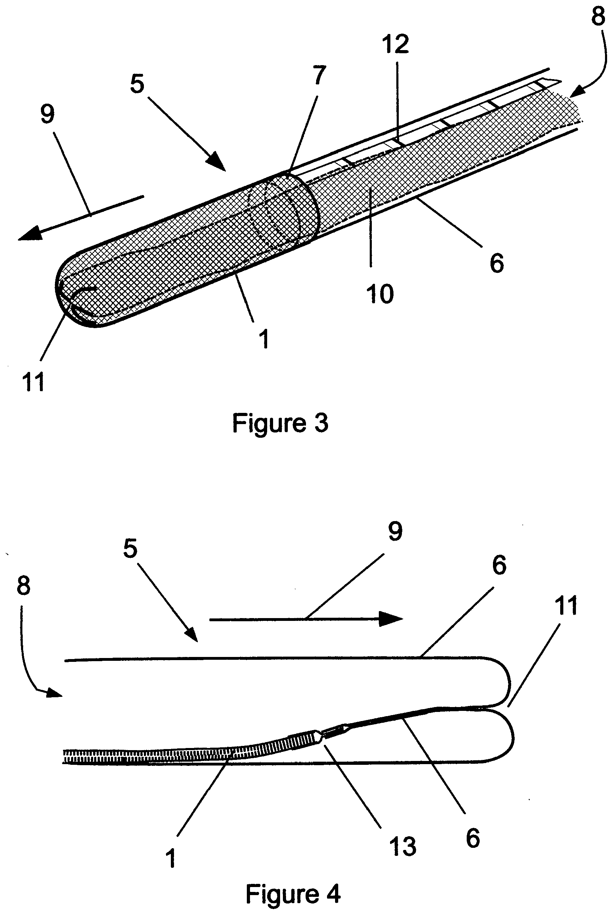

The extender-tube and extended liner are illustrated in figures 3, 4, 5 and 22. Figure 3 shows an extended liner 5 formed by a liner 1 and an extender-tube 6 that are joined by a connection 7 which, in this illustration, is an overlapping joint. A pressurising fluid that is introduced into the interior 8 of the extended liner causes it to evert and extend progressively in direction 9. The uneverted part 10 of the liner, that is not yet everted, is located inside the extended liner and is being drawn progressively in direction 9 towards the point of eversion 11. The liner is depicted by hatching in figure 3 and the part of the liner that is located in the interior of the extended liner is identified with a broken-line outline. A scale 12 is marked on the extender-tube.

Figure 4 provides a longitudinal sectional view of an extended liner 5 where a liner 1 and an extender-tube 6 are connected by a flexible connector-sleeve 13. A pressurising fluid is introduced into the interior 8 of the extended liner, causing it to evert and extend progressively in direction 9. In this example the extender-tube is not fully everted and the liner and the connector-sleeve are in lay-flat mode, not having yet reached the point of eversion 11 and been everted.

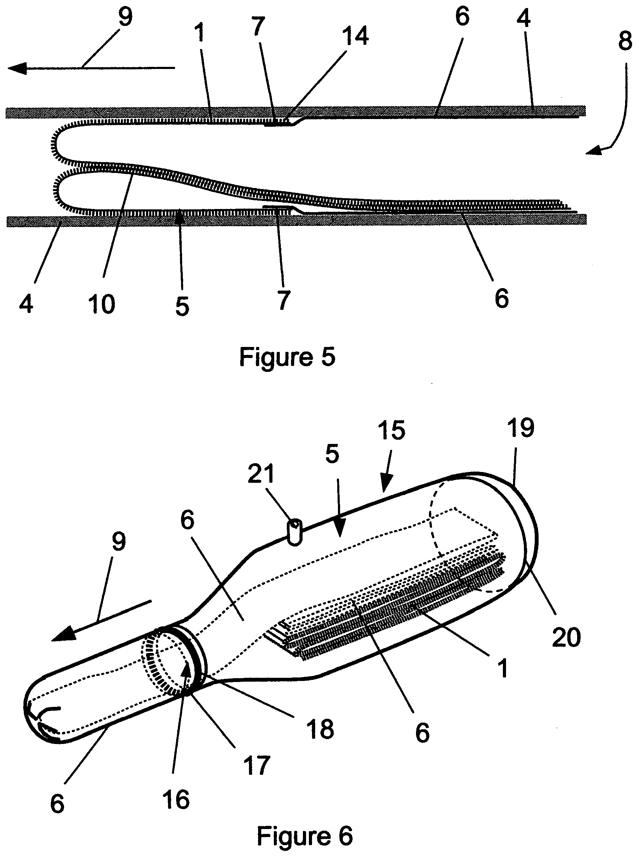

Figure 5 depicts in longitudinal sectional view a pipe 4 into which an extended liner 5 is being inserted. The extended liner consists of a liner 1 and an extender-tube 6 that are joined by a connection 7 which, in this illustration, is an overlapping joint. By means that may include using the scale on the extender-tube (not shown in this figure), it has been possible to ensure that a predetermined length of extender-tube has been everted into the pipe so that the proximal end 14 of the liner is positioned at a predetermined position within the pipe. A pressurising fluid is introduced into the interior 8 of the extended liner, causing it to evert and extend progressively in direction 9. In this illustration the extender-tube that forms part of the extended liner is fully everted and the uneverted part 10 of the liner is being drawn progressively through the extended liner in direction 9.

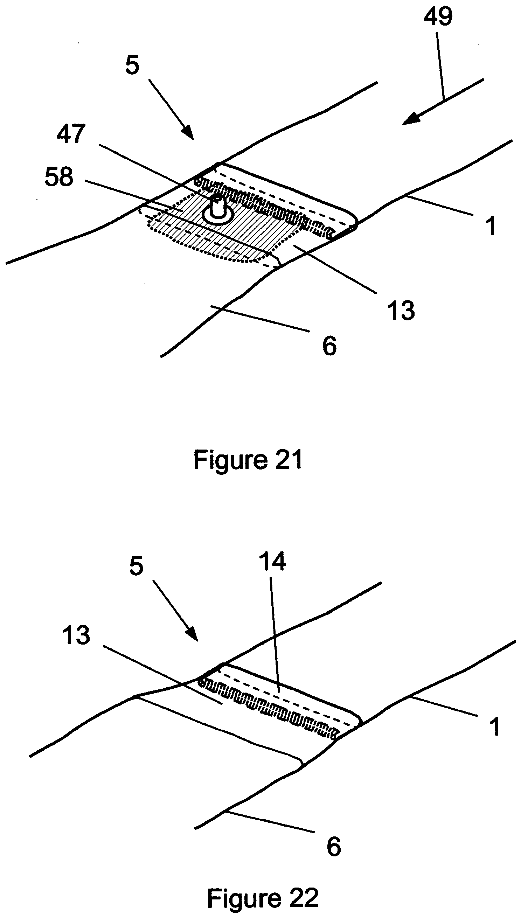

Figure 22 depicts a section of an extended liner 5 where a liner 1 is connected to an extender-tube 6 by means of an intermediate connector-sleeve 13 which is tapered to accommodate the different circumferences of the extender-tube and liner. The extended liner is shown in lay-flat mode and the differences in circumference are shown by the different lay-flat widths. The connector-sleeve overlaps the proximal end 14 of the liner and is joined to it in a manner that allows it to be readily removed when curing is complete.

An example of the method of the invention also provides a pressurisable chamber hereinafter called a launch chamber into which a liner or an extended liner may be loaded which incorporates an outlet aperture through which the proximal end of the liner or the extender-tube is passed and everted. The proximal end of the liner or the extender-tube is attached to the outlet aperture so that, when a pressurising fluid is introduced into the launch chamber, the liner or the extended liner may be caused to evert and extend through and beyond the outlet aperture. Means are provided for access to the interior of the launch chamber so that the liner or extended liner may be loaded into it and for closing the access so that it is substantially leak-proof.

A valve or other aperture hereinafter referred to as a pressure-valve is provided for introducing a pressurising fluid into an extender-tube or into a launch chamber which may be fitted to the extender-tube and additionally or alternatively may be fitted to the launch chamber.

In a preferred embodiment of the invention the pressurisable chamber is elongated and of substantially constant cross section over a substantial part of its length and such cross section may preferably be substantially rectangular or oval or circular. Means are provided for loading a liner or an extended liner into the launch chamber including but not limited to an access aperture of suitable size and at a suitable position on the launch chamber. Means are provided for closing the access aperture whereby a substantially leak-proof seal is achieved, such as by a closure or cover. An outlet aperture or nozzle hereinafter referred to as a nozzle is fitted to or is integral with the launch chamber or, if preferred or appropriate, is fitted to or is integral with the means for closing the launch chamber such as a closure or cover. A method is provided whereby the proximal end of a liner or an extender-tube is passed through the nozzle, everted and joined to the nozzle. A method is also provided whereby a liner or an extended liner is loaded into the launch chamber following which the launch chamber is closed, a preferred method of loading being to fold the liner or the extended liner in loops in a manner such that it will readily be drawn off as it everts and extends and to insert it into the launch chamber. Following the closing of the launch chamber, a pressurising fluid may be introduced into the launch chamber and pressurised, causing the liner or the extended liner to evert and extend out of it.

In a further embodiment of the invention the launch chamber is of elongated form and is substantially of a flexible impermeable material such as a fabric coated with a plastic. This form of launch chamber is hereinafter referred to as a launch-bag. In one embodiment of the invention, a nozzle is fitted to or integral with one end of the launch bag hereinafter referred to as the outlet end. The end of the extender-tube is passed through the nozzle, everted and joined to the nozzle. In a preferred form the main body of the launch- bag is tapered towards the outlet end. Means are provided for closing the other end of the launch-bag hereinafter referred to as the loading end and such means may take any suitable form including the form of a clamp or a closable aperture fitted to the loading end. In a variant of this embodiment of the invention the extender-tube is attached directly to the launch-bag so that the extender-tube and the launch-bag, both being of flexible impermeable material, are integrated into a single fabrication with no intervening nozzle and, in a further variant of the invention, the extender-tube and the launch-bag are combined and constructed substantially or wholly from a single piece of material. Another further variant of this embodiment of the invention provides a liner attached directly to the launch-bag so that the two components are integrated into a single fabrication with no intervening extender-tube.

Various preferred forms of launch-chamber are illustrated in figures 6 to 10.

In figure 6 a launch chamber 15 is shown in general view and the part of a combined extender-tube 6 and liner 1 forming an extended liner 5 that are folded in loops and located within the launch chamber are depicted in dotted-line. The proximal end 16 of the extender-tube is everted and turned back over the nozzle 17 that is integral with the launch chamber and is held in place by a hose-clip 18. A cover 19 closes the access aperture 20 through which the combined extender-tube and liner are loaded into the launch chamber. By introducing a pressurising fluid into the launch chamber through the pressure-valve 21, the combined extender-tube and liner is caused to evert and to extend progressively in direction 9.

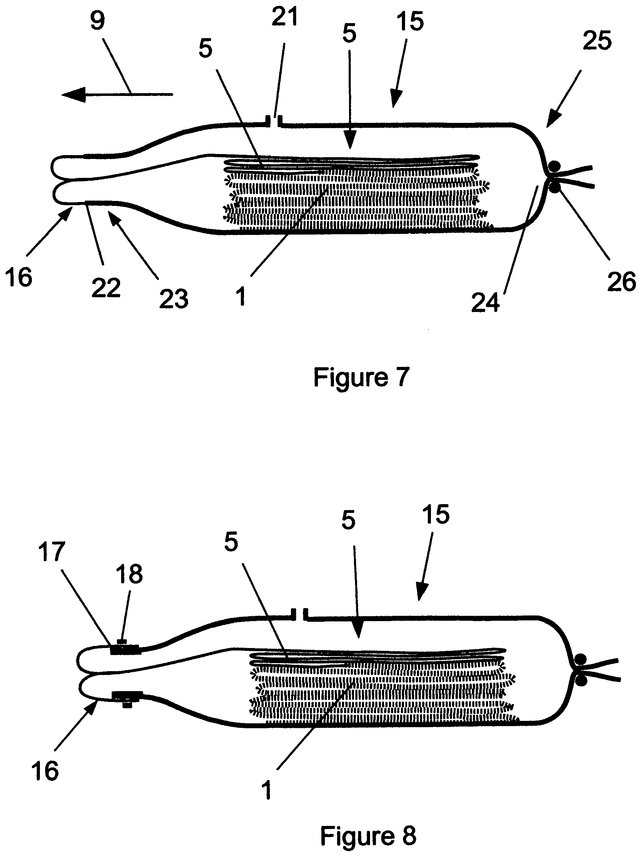

Figure 7 shows in longitudinal sectional view a launch-bag 51 that is substantially cylindrical in form and is constructed from a flexible substantially impermeable material. An extended liner 5 in the form of a combined extender-tube 6 and liner 1 is loaded into the launch-bag. The proximal end 16 of the extender-tube projects through an opening 22 in the outlet end 23 of the launch-bag and is everted and attached to the opening. An opening 24 at the access end 25 of the launch-bag provides access through which the combined extender-tube and liner may be loaded into the launch-bag. The opening at the access end of the launch-bag is here shown to be closed and secured by a clamp 26 which presses the material of the launch-bag to close the opening. A pressurising fluid may be introduced into the launch-bag through a pressure-valve 21 causing the combined extender-tube and liner to evert and extend in direction 9.

Figure 8 shows in longitudinal sectional view a launch-bag 51 that is substantially cylindrical in form and is constructed from a flexible substantially impermeable material and is fitted with a nozzle 17. An extended liner 5 in the form of a combined extender-tube 6 and liner 1 is loaded into the launch-bag and the proximal end 16 of the extender-tube projects through the nozzle and is everted and attached to the nozzle and secured by a hose-clip 18.

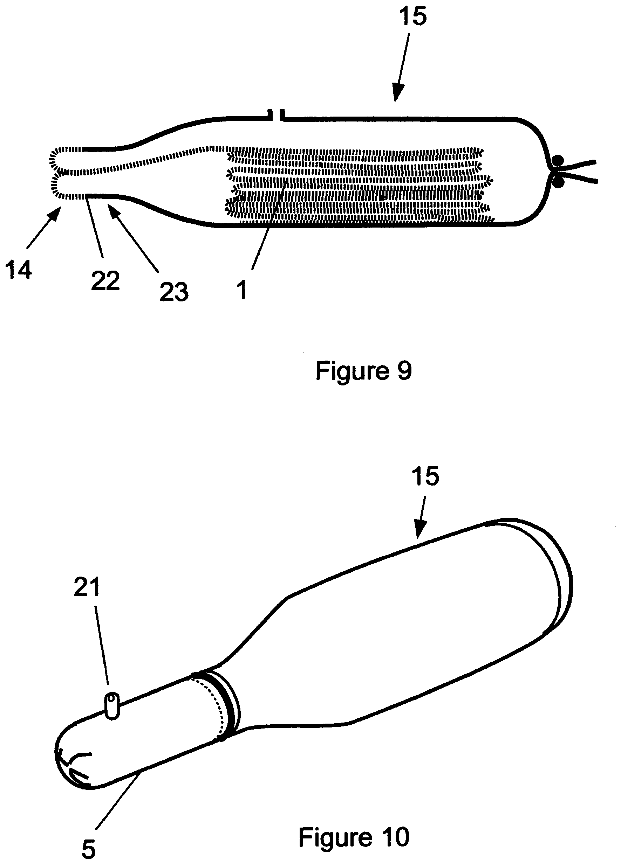

Figure 9 shows in longitudinal sectional view a launch-bag 51 that is substantially cylindrical in form and is constructed from a flexible substantially impermeable material. A liner 1 is loaded into the launch-bag and the proximal end 14 of the liner projects through an opening 22 in the outlet end 23 of the launch-bag and is everted and attached directly to the opening.

Figure 10 depicts part of an extender-tube 6 emerging from a launch chamber 15 (The rest of the extended liner of which it forms a part is concealed within the launch chamber). A pressure-valve 21 is fitted to the extender-tube through which pressurising fluid may be introduced.

An example of the method of the invention also provides a closure that may be attached to the distal end of a liner including the distal end of a extended liner. The closure is preferably of a flexible material and provides a substantially leak-proof seal at the end of the liner and is preferably configured so that it will evert and serve to ensure that the distal end of the liner everts fully.

A preferred embodiment of the invention provides a closure in the form of a sleeve, hereinafter referred to as a closure-sleeve, that is of a flexible substantially impermeable material. In a preferred form the closure-sleeve is of a circumference similar to that of the outer surface of the liner and is positioned so that one part of it encloses the distal end of the liner and the other part projects beyond the distal end of the liner. The part of the closure-sleeve that encloses the distal end of the liner is attached to the liner and the distal end of the closure-sleeve is closed so that the closure-sleeve forms a closure over the distal end of the liner which, when the liner is fully everted, provides a substantially leak-proof pressure-retaining closure. A closure-sleeve may be fabricated from a sheet of suitable material, wrapped to form a tube and closed or sealed at the seam and distal end.

An example of the method of the invention provides a method whereby a liner including an extended liner is everted into position by the application of a fluid under pressure as herein described and may be subsequently supported in position by the continued application of pressure to the fluid which is retained in the liner or extended liner by a closure or closure-sleeve, the closure or closure-sleeve being of a configuration that provides a sufficiently leak-proof pressure-retaining closure and allows the liner to conform to the inner surface of the pipe in which it is positioned.

An example of the method of the invention also provides a method whereby the distal end of a closure-sleeve is initially open, providing an aperture through which material such as resin may be introduced into the liner. The open-ended closure-sleeve may subsequently be closed to provide a closure that is substantially leak-proof and pressure-retaining. Methods of closing the open-ended closure-sleeve include but are not limited to sealing with adhesive or tape or by welding or binding or by applying a clamp or collar or other mechanical device, and an ancillary device including but not limited to an access valve or aperture or an anchor-point may be incorporated in the closure.

A cord or other suitable elongated flexible material hereinafter referred to as a drag-cord may be attached by one end to the closure-sleeve or by other suitable attachment to the distal end of the liner prior to everting the liner or the extended liner and the other end of the drag-cord may be anchored or otherwise caused to remain positioned at a suitable location close to the proximal end of the extender-tube or to the proximal end of the liner if no extender-tube is used so that the eversion process causes the drag-cord to be drawn through the liner or the extended liner.

A variant of the invention provides a closure-sleeve that is initially of an extended length, so that it encloses an extended part of the distal end of the liner, and is attached to the liner by a joint that is positioned at or near to the proximal end of the closure-sleeve. When in use, any excess length of the closure-sleeve and the liner may be removed to suit the required dimensions of the liner without the need to adjust or move the position of the joint that attaches the closure-sleeve to the liner. It is envisaged that this variant will be useful where there is benefit in attaching the closure-sleeve as part of the off-site manufacture or preparation of a liner or extended liner.

In a preferred embodiment of the invention a closure-sleeve is attached to the distal end of a liner by a method of attachment that readily allows the user to remove it together with any attachment material or part following the completion of the process of positioning the liner and, if appropriate, the hardening or curing of the liner. Methods of removal include but are not limited to peeling or otherwise breaking off the closure-sleeve and any attachment material or intermediate part, releasing by dissolving or washing away or heating the closure or attachment or any adhesive or sealant, and bursting or other mechanical destruction. A preferred method for removing the closure-sleeve is by applying a pulling force to the proximal end of a drag-cord or other elongated part that is attached to the closure-sleeve in a manner such that the closure-sleeve may be drawn towards the proximal end of the liner and peeled or broken off or otherwise detached from the liner.

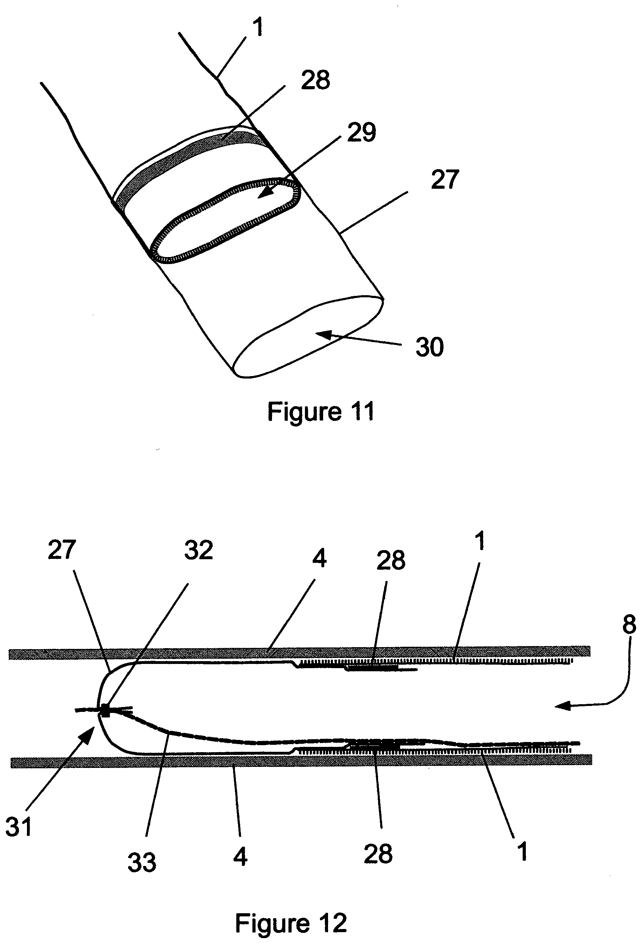

The closure-sleeve is illustrated in figures 11 to 13.

Figure 11 shows in general view a closure-sleeve 27 fitted round the end of a liner 1. The closure-sleeve is attached to the liner by a connection 28. The closure-sleeve encloses the opening 29 at the end of the liner and the opening 30 at the end of the closure-sleeve provides access whereby materials such as resin may be introduced into the liner.

Figure 12 shows in longitudinal sectional view the distal end of a liner 1 following the completion of eversion of the liner into a pipe 4. A closure-sleeve 27 is attached to the inner surface of the liner by a connection 28. The distal end 31 of the closure-sleeve is closed by a closure 32 which in this example is in the form of a binding and the interior 8 of the liner is pressurised by a pressurising fluid. A drag-cord 33 is attached to the closure 32 and, having been drawn in by the eversion process, extends through the full length of the liner (only the distal end of the drag-cord is shown).

An example of the method of the invention also provides a pressurisable tube or bladder, hereinafter referred to as a pressure-tube, consisting of a tube of a flexible substantially impermeable material such as a plastic-coated fabric which may be positioned within a liner, including an extended liner, and pressurised by the introduction of a pressurising fluid and, by pressing against the inner surface of the liner, may cause the liner to be pressed outwards and, if the liner is positioned within a pipe, to be pressed against the inner surface of the pipe.

The pressure-tube is preferably closed at both ends so that it forms an inherently hermetically closed entity prior to insertion into a liner or extended liner but one or both ends may be initially open when the pressure-tube is introduced into the liner, in which case means are provided for closing any open end preparatory to introducing a pressurising fluid into the pressure-tube. Pressurising means are provided whereby a pressurising fluid may be introduced into the pressure-tube and, if required, for removing it and, in a preferred form, such means consist of an aperture or valve, hereinafter referred to as a pressure-valve. More than one pressure-valve may be provided and a pressure-valve may be incorporated into the main body of the pressure-tube or may be integrated with means for closing any open end of the pressure-tube, for example by gathering the material at the end of the pressure-tube round a pressure-valve and binding or clamping it against the pressure-valve in a sealing manner. The invention also provides a pressure-tube that includes means for introducing and additionally or alternatively for circulating fluid including heated fluid and such means may comprise another valve or may include one or more tubes that may be included within or in conjunction with the pressure-tube by which fluid may be introduced into or circulated within or returned out of the pressure-tube.

The invention provides insertion means for inserting a pressure-tube into a liner including but not limited to pushing it by pushing means such as but not limited to a rod or rods or pulling it by pulling means such as but not limited to a rod or a cord or tape or tube or other suitable elongated material or instrument and attachment means such as but not limited to a pocket or loop or eyelet or tape or tie or any combination of a pocket or loop or eyelet or tape or tie or, if the pressure-tube is initially open at one or both ends, it may be everted into the liner. In a preferred embodiment of the invention, means are provided for attaching one end of the pressure-tube to the distal end of the liner prior to eversion of the liner including attaching it to a closure-sleeve or other closure or fixture on the distal end of the liner and for causing the pressure-tube to be drawn progressively into the liner as the liner or the extended liner is everted. Alternatively or additionally, means are provided for attaching one end of a pressure-tube to means whereby it may be dragged or pushed into or through a liner, such dragging means including but not limited to a cord or tape or rod and such pushing means including but not limited to a rod or rods and such attachment means including but not limited to loops pockets tapes or eyelets attached to the pressure-tube to which the dragging or pushing means may be attached.

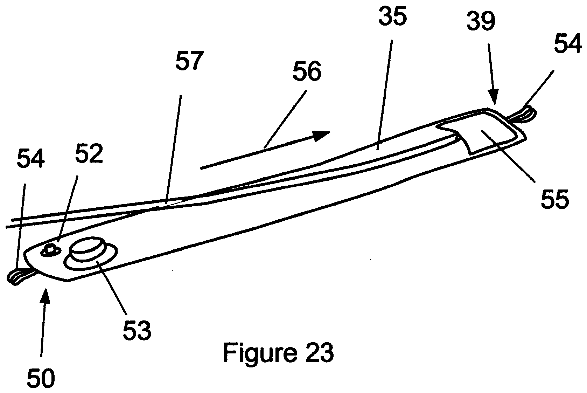

Figure 23 shows a pressure-tube 35 in lay-flat mode. It is depicted in exaggeratedly short form to aid the illustration. Both the proximal end 50 and the distal end 39 of the pressure-tube are sealed and a pressure-valve 52 is incorporated into the proximal end through which pressurising fluid may be introduced into and removed from the pressure-tube. In this example a second, larger access valve 53 is also provided suitable for introducing and removing heated water to accelerate liner curing. Means are provided for closing both valves, such as caps or plugs fitting on or in the valves, not shown in this figure. Loops 54 are provided at the distal and proximal end of the pressure-tube to which a cord or rod may be attached or which may be attached to a closure-sleeve or other attachment at the distal end of a liner so that the pressure-tube may be dragged in by a liner as it everts and a pocket 55 is fitted into which a rod 57 may be inserted for the purpose of pushing the pressure-tube in direction 56.

An example of the method of the invention provides a preferred method for attaching a pressure-tube to the liner and for drawing the said pressure-tube into the liner as the liner or the extended liner everts.

A closure sleeve or other closure preferably of a low-strength degradable material may optionally be attached to the distal end of the liner to ensure that it everts fully. A short section at the distal end of the pressure-tube is inverted and inserted into the main body of the pressure-tube so that the visible end of the pressure-tube is the point of inversion, hereinafter referred to as the inverted end. One or more straps are provided of a flexible material for the purpose of attaching the pressure-tube to the distal end of the liner. One end of each strap, hereinafter referred to as the proximal end, is attached to the exterior of the pressure-tube at a point close to the inverted end of the pressure-tube with the strap aligned with the pressure-tube and positioned so that the distal end of the strap, which is the end of the strap that is not attached to the pressure-tube, overlaps and projects beyond the inverted end of the pressure-tube. The distal end of each strap is attached to the distal end of the liner in a manner such that the pressure-tube and the liner are aligned and the distal end of the pressure-tube and the distal end of the liner are separated by a spacing that is sufficient to provide freedom for the next-described steps in this method to take place effectively and to permit the eversion of any closure that may be fitted to the distal end of the liner. When prepared according to the above-described arrangement, as the liner or the extended liner is everted under pressure into the pipe, the pressure-tube is drawn into the everting liner until the point is reached where the part of the liner to which the distal end of the strap or straps is or are attached becomes everted. Continued application of pressure causes the remaining part of the liner and any closure that may be fitted to become fully everted, with the closure serving to ensure that the distal end of the liner is sufficiently straightened and everted, following which continued or increased pressure may be applied to cause the closure to burst or otherwise to open up. A pressurising fluid is introduced into the pressure-tube causing it to expand to fill the interior of the liner and causing the inverted distal end to evert and extend beyond the end of the liner and the liner may be caused to be pressed firmly and shaped against the inner surface of the pipe and held in position by the sustained application of pressure within the pressure-tube. A preferred method for removing the pressure-tube is by applying a pulling force to the proximal end of the pressure-tube in a manner such that the pressure-tube may be drawn towards the proximal end of the liner and any straps are peeled or broken off or otherwise detached from the liner. A preferred method for attaching the distal end of a strap to the distal end of the liner is by means of an adhesive or tape that is applied so that the connection is subjected to a shear force by tension in the strap as the pressure-tube is drawn into the liner and then, as a result of eversion of the liner to which the distal end of the strap is attached, is subjected to a peel force by tension in the strap when the pressure-tube is drawn in the opposite direction and withdrawn. The invention provides a method whereby some or all of the pressurising fluid may be partly or wholly removed from the pressure-tube before it is withdrawn thereby causing the outer surface of the pressure-tube to separate from the inner surface of the liner, facilitating removal of the pressure-tube.

A strap may consist of more than one part which may be separable, such parts being combined or connected by, for example, a buckle to provide a sufficiently strong and flexible connection between the distal end of the pressure-tube and the distal end of the liner. in one embodiment of the invention the proximal end of the strap or straps is permanently attached to the pressure-tube. In another variant of the invention a flexible sleeve is provided as an alternative to a strap or straps, the proximal end of which is attached to the distal end of the pressure tube and the distal end of which is attached to the distal end of the liner, the attachments to the liner and to the pressure-tube being optionally leak-proof.

An example of the method of the invention provides a retrieval cord or tape which may be attached to the proximal end of a pressure-tube use of which includes but is not limited to retrieving a pressure-tube where direct access to the proximal end of the pressure-tube is not available, for example, where a liner being pressurised is located in a pipe at some distance from the access end of the pipe. The invention also provides an extension fluid-feed tube which may be attached to the proximal end of a pressure-tube, use of which includes but is not limited to introducing fluid into and removing fluid from a pressure tube, particularly where direct access to the proximal end of the pressure-tube is not available.

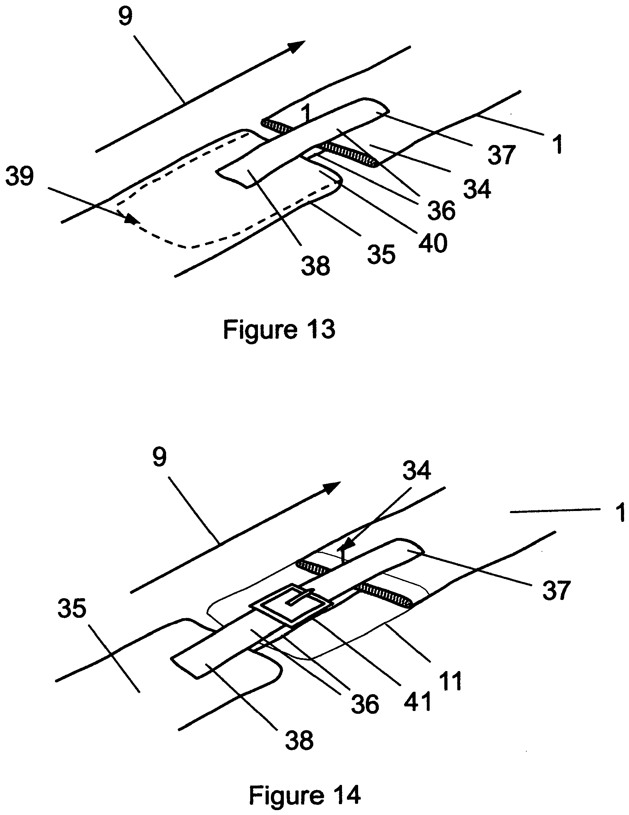

Figures 13 to 16 illustrate how a pressure-tube may be drawn into a liner by means of straps attached to the end of the liner and then pressurised.

Figure 13 shows the distal end 34 of a liner 1 and a pressure-tube 35 that is positioned in alignment with the liner and is connected to the liner by a pair of straps 36, one of which is attached to the underside of the liner and pressure-tube and consequently is largely concealed in this figure 13. The straps are connected to the liner by a connection at the distal end 37 of each strap and to the pressure-tube by a connection at the proximal end 38 of each strap. The distal end 39 of the pressure-tube is inverted and inserted into the main body of the pressure-tube and consequently is concealed and is shown in this figure 13 in dotted line and the visible end is the inverted end 40 of the pressure-tube. When the liner is everted the pressure-tube is drawn in direction 9.

Figure 14 shows the distal end 34 of a liner 1 to which is attached a closure-sleeve 27 which is of a transparent material in this example. A pressure-tube 35 is positioned in alignment with the liner and is connected to the liner by a pair of straps 36, one of which is attached to the underside of the liner and pressure-tube and consequently is largely concealed. The straps are each in two sections connected by a buckle 41 and in this example the proximal end 38 of each strap is permanently attached to the pressure-tube and the distal end 37 of each strap is attached to the liner by an adhesive so that it may readily be peeled away on completion of the installation of the liner. The distal end of the pressure-tube is inverted and inserted into the main body of the pressure-tube and consequently is concealed. When the liner is everted the pressure-tube is drawn in direction 9.

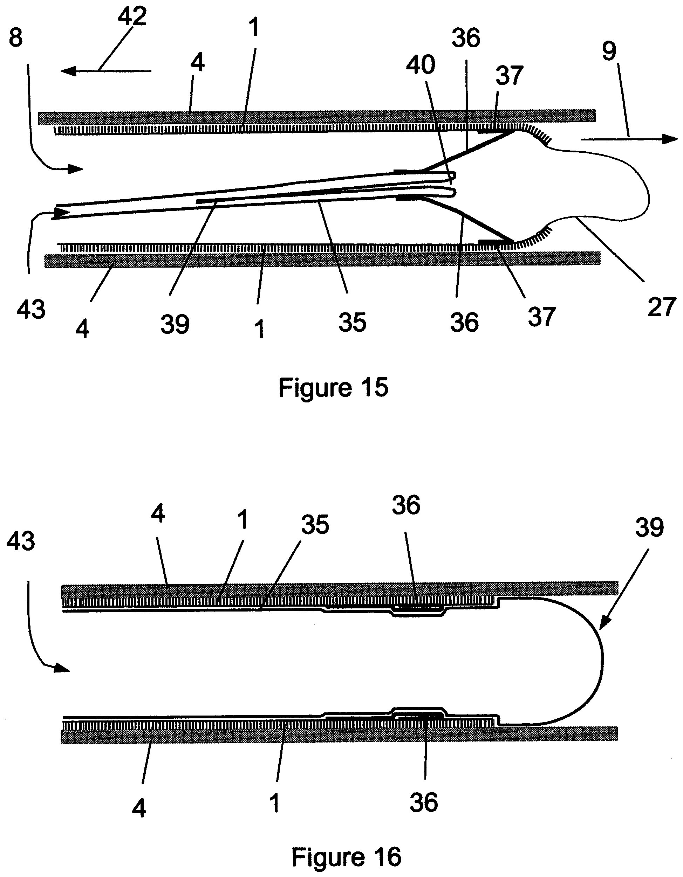

Figure 15 shows in longitudinal cross-section a liner 1 that is almost completely everted into a pipe 4. A closure-sleeve 11 which is attached to the end of the liner is in process of everting and expanding under pressure of fluid which in this example is air that fills the interior 8 of the liner. A pressure-tube 35 the distal end 39 of which has been inverted and inserted into the body of the pressure-tube has been drawn into position by two straps 36 which are attached to the pressure-tube at the inverted end 40 of the pressure-tube and to points on the inner surface of the liner which are now stationary and which, prior to eversion, had formed the exterior surface of the liner. The distal ends 37 of the straps have been turned through 180° so that, when a force is applied to the pressure-tube to withdraw it in direction 42 (following completion of the lining process), the distal ends of the straps will be subjected to a peeling force in the same direction. When fluid is introduced under pressure into the interior 43 of the pressure-tube, the pressure-tube will expand to fill the liner and the distal end of the pressure-tube will evert and extend in direction 9, beyond the end of the liner.

Figure 16 shows in longitudinal cross-section a liner 1 that is positioned within a pipe 4 and is filled by a pressure-tube 35 the interior 43 of which is filled with a pressurising fluid which in this example is air. Two straps 36 which are joined to the liner and to the pressure-tube are pressed between the inner surface of the liner and the outer surface of the pressure-tube. The distal end 39 of the pressure-tube extends beyond the end of the liner.

An example of the method of the invention also provides a loader-packer in the form of a container or pallet into which or onto which the liner or the extended liner and any drag-cord and any pressure-tube that may be directly or indirectly attached to them may be wholly or partly loaded which may then be loaded or inserted into the launch chamber and provides a method whereby the liner or the extended liner and any drag-cord and any pressure-tube that may be directly or indirectly attached to them may be wholly or partly loaded onto a container or pallet which is then loaded or inserted into the pressurisable chamber. The pallet may conveniently be rectangular and of such dimensions that the whole or part of the liner or the extended liner and any drag-cord and any pressure-tube that may be directly or indirectly attached to them may be folded in loops and placed on it and it may have one or more substantially vertical sides which may be removable. The container may conveniently be formed with a rectangular base and be of such dimensions that the whole or part of the liner or the extended liner and any drag-cord and any pressure-tube that may be directly or indirectly attached to them may be folded in loops and placed in it. The container may be fully enclosed by substantially vertical sides or may be partially enclosed and may be wholly or partly closed by a closure such as a lid or cover and may be of a form such that a fluid such as a lubricant may be introduced into it without significant leakage or spillage. The container may be of rigid construction or of a flexible material in the form of a wrapper or bag and may be configured so that it may be wholly or partly removed from the launch chamber before the launch chamber is closed in readiness for everting the liner or extended liner.

A preferred method for loading the liner or the extended liner and any drag-cord and any pressure-tube that may be directly or indirectly attached to them onto or into a loader-packer and then loading or inserting them into the launch chamber is to fold them in loops with the proximal end of the extender-tube uppermost and with the remaining part of the extender-tube and then the proximal end of the liner and the remaining part of the liner and then any drag-cord and any pressure-tube that may be directly or indirectly attached to them positioned successively underneath the liner. The liner or the extended liner and any drag-cord and any pressure-tube that may be directly or indirectly attached to them are placed into or onto a loader-packer and may conveniently be inserted directly into the launch chamber. The arrangement of the liner or the extended liner and any drag-cord and any pressure-tube that may be directly or indirectly attached to them and the loader-packer is such that the liner or the extended liner and any drag-cord and any pressure-tube that may be directly or indirectly attached to them may be readily drawn off progressively as the liner or the extended liner are everted. A lubricant may applied to the liner or to the combined liner and extender-tube and to any drag-cord or pressure-tube or other item that may be attached.

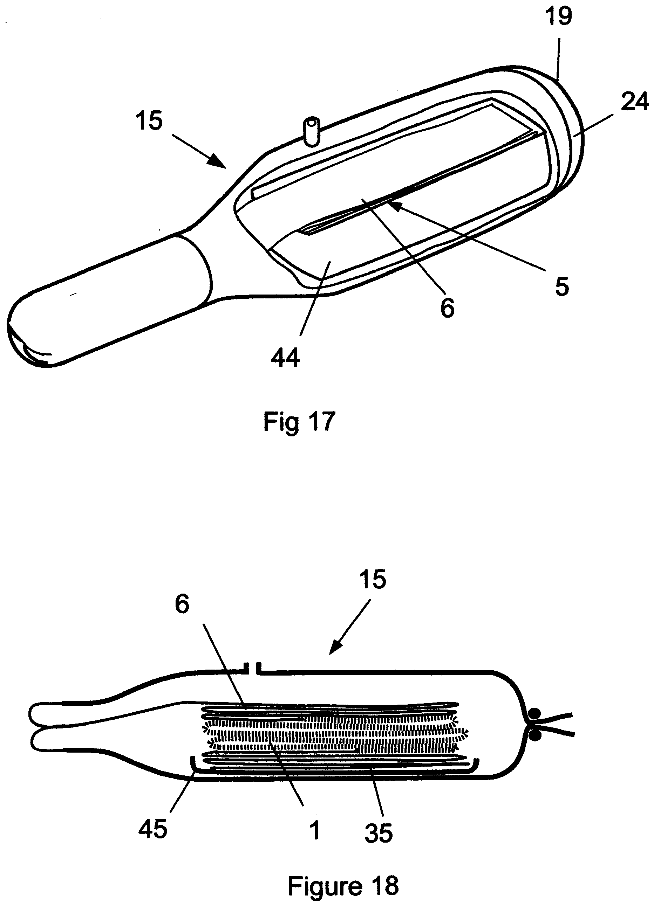

Figures 17, 18 and 19 show some combinations of types of launch chamber and types of loader-packer that may be used to aid loading liners, extended liners, pressure-tubes and ancillary items into the pressurisable chambers.

In figure 17, which provides a general view of a launch chamber 15 with a cut-away section to reveal the interior, an extended liner 5 is folded in loops and placed within a container 44. In this example the extended liner was loaded into the container whilst outside the launch chamber and then the container with the extended liner inside was loaded into the launch chamber through the opening 24 at the loading end of the launch chamber which was then closed by the closure 19. In this example only the extender-tube 6 part of the extended liner is visible, the liner part of the extended liner and any attached additional items such as a pressure-tube being positioned out-of-sight in the container, below the extender-tube. The container is configured to allow the extended liner and pressure-tube to unfold progressively as they evert and extend.

Figure 18 shows in longitudinal section an extender-tube 6 and a liner 1 to which a pressure-tube 35 is attached, all folded in loops and loaded onto a pallet 45 which in turn has been loaded into a launch chamber 15. In this example, the launch chamber is of a flexible material and the extender-tube and the launch chamber form a single construction, with no intermediate nozzle connecting them.

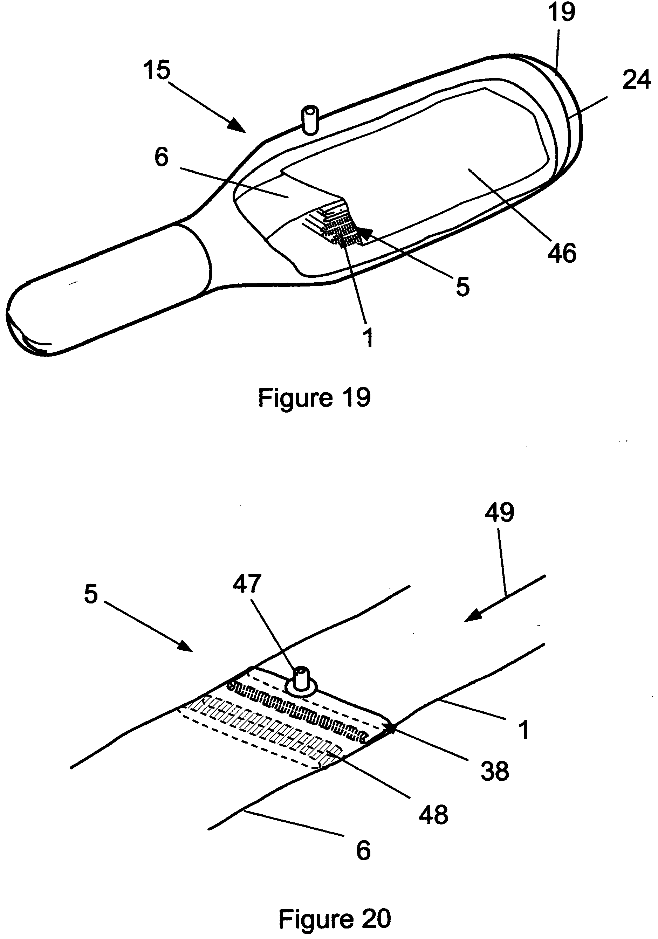

Figure 19 provides a general view of a launch chamber 15 with a cut-away section to reveal the interior in which an extended liner 5 consisting of an extender-tube 6 and a liner 1 is folded in loops and contained within a bag 46. In this example the extended liner was packed into the bag whilst outside the launch chamber and then the bag with the extended liner inside was loaded into the launch chamber through the opening 24 at the loading end of the launch chamber which was then closed by the closure 19. The bag is configured to allow the extended liner to unfold progressively as it everts and extends.

An ancillary provision of an example of the method of the invention relates to the preparation of the liner. According to the UK-based WRc standards published in the Drain Repair Book, suction must be used to draw resin through a liner when it is impregnated. Accordingly, and to aid the process of impregnation, a suction-valve is provided, fitted either at the proximal end of the liner part of an extended liner or at the distal end of the extender-tube part of an extended liner or on the connector-sleeve, through which air may be drawn to create a partial vacuum within the liner so that resin introduced into the liner at the distal end is drawn through and impregnates the liner. Sealing means are provided whereby the extender-tube is sealed to prevent air from passing through it to the suction-valve and such means include but are not limited to the materials of extender-tube or connector-sleeve or both being of a nature such that the inner surfaces of the extender-tube or connector-sleeve or both are drawn together in a sealing manner when suction is applied or a clamp or clamps or a seal such as a tape over the extender-tube aperture or a coating or band of sealant material applied or attached to the inner surface of the the extender tube or a combination of these means, the sealing means being removable or of a nature and dimensions that permit the extended liner to be everted after impregnation is completed.

The application of suction to a suction-valve fitted to the extender-tube or to the connector-sleeve, if used, may cause the extender-tube and the connector-sleeve, which are in substantially lay-flat mode prior to impregnation of the liner, to collapse so that the inner surfaces are drawn tightly together, restricting or even preventing the passage of air out of the liner into the extender-tube or connector-sleeve or both. In order to overcome this, separation means are provided for separating the inner surfaces of the extender-tube or connector-sleeve or both to allow the passage of air from the liner to the suction-valve, such separation means including but not being limited to a tube or a separator that is sufficiently porous to allow the passage of air through the body of the said separator when it is positioned within an extender-tube or connector-sleeve or both, between the liner and the suction-valve. In a preferred embodiment, the separator comprises a porous pad of a material or materials through which air will readily pass
such as sponge or felt.

Figure 20 depicts a section of an extended liner 5 where a liner 1 is connected to an extender-tube 6. A suction-valve 47 is fitted to the proximal end 38 of the liner and a band of sealant material 48 is attached to the inner surface of the extender-tube. Broken line has been used to depict features and edges of features that are located below the upper surface of the liner and extender-tube. In this example the opposing faces of the band of sealant material will need to be pressed together to achieve a seal. Suction applied through the suction-valve causes resin to be drawn through the liner in direction 49.

Figure 21 depicts a section of an extended liner 5 where a liner 1 is connected to an extender-tube 6 by a connector-sleeve 13. The extender-tube is tapered to match the dimensions of the connector-sleeve. A suction-valve 47 is fitted to the connector-sleeve. A separator 58 is positioned inside the connector-sleeve and against the end of the liner, providing a path through which air may pass from the liner into the suction-valve to create a partial vacuum and draw resin into the liner in direction 49. Broken line has been used to depict features and edges of features that are located below the upper surface of the liner and extender-tube.

## Claims

1. A method of lining a pipe (4) comprising the steps of:
providing a flexible, elongate, tubular pipe-liner (1) that has first and second ends and that is capable of being everted;
providing a flexible, substantially-impermeable, elongate extender-tube (6) that has first and second ends and that is capable of being everted;
**characterised by** attaching the second end of the extender-tube to the first end of the pipe-liner with an overlapping joint connection (7) which extends continuously around the entire circumference of the extender tube (6) so that the combined extender-tube and pipe-liner form a continuous tubular construction that is leak-proof between the first end of the extender-tube and the second end of the pipe-liner;
everting the combined extender-tube (6) and pipe-liner (1) using fluid under pressure to drive at least part of the eversion process progressively so that the extender-tube is first to evert and drags the pipe-liner through the extender-tube, and so that the pipe-liner then everts after the eversion of the extender-tube is completed, so that the pipe-liner becomes positioned at a desired position in the pipe (4) being lined; and
detaching the extender-tube from the pipe-liner and removing the extender-tube from the pipe (4) being lined.

2. A method as claimed in claim 1, wherein:
the pipe-liner comprises a tube of an absorbent material impregnated with a hardenable fluid; and
the method includes the step, after the everting step, of allowing the hardenable fluid to harden.

3. A method as claimed in claim 2, further including the step of:
supporting the fully everted pipe-liner against an inner surface of the pipe (4) being lined while the hardenable fluid is hardening.

4. A method as claimed in claim 3, wherein the supporting step includes the steps of:
positioning a pressure-tube (35) of a flexible material within the pipe-liner; and
filling the pressure-tube with fluid under pressure so that the pressure-tube presses the pipe-liner (1) against the inner surface of the pipe (4) being lined.

5. A method as claimed in claim 4, further including the step of:
substantially hermetically sealing the pressure-tube (35) during the supporting step.

6. A method as claimed in claim 4 or 5, wherein the step of positioning the pressure-tube within the pipe-liner comprises the steps of:
attaching a first end (50) of the pressure-tube (35) to the second end of the pipe-liner so that the pressure-tube is dragged into the pipe-liner as the pipe-liner everts; and
during the step of filling the pressure-tube with fluid under pressure, allowing the first end of the pressure-tube to evert so that the pressure-tube presses the pipe-liner against the inner surface of the pipe being lined along substantially the entire length of the pipe-liner.

7. A method as claimed in any preceding claim, wherein the step of attaching the extender-tube (6) to the pipe-liner (1) comprises the step of:
attaching an intermediate sleeve (13) that is capable of being everted between the first end of the pipe-liner and the second end of the extender-tube.

8. A method as claimed in claim 7, wherein:
the intermediate sleeve (13) is elastic.

9. A method as claimed in claim 7 or 8, wherein:
the intermediate sleeve (13) is impermeable.

## Patentansprüche

1. Verfahren zum Auskleiden eines Rohrs (4), das die folgenden Schritte beinhaltet:
Bereitstellen einer flexiblen, länglichen, tubulären Rohrauskleidung (1) mit einem ersten und einem zweiten Ende, die evertiert werden kann;
Bereitstellen einer flexiblen, im Wesentlichen undurchlässigen, länglichen Extenderröhre (6) mit einem ersten und einem zweiten Ende, die evertiert werden kann;
**gekennzeichnet durch** Anbringen des zweiten Endes der Extenderröhre am ersten Ende der Rohrauskleidung mit einer überlappenden Fugenverbindung (7), die kontinuierlich um den gesamten Umfang der Extenderröhre (6) verläuft, so dass die Kombination aus Extenderröhre und Rohrauskleidung eine kontinuierliche tubuläre Konstruktion bildet, die zwischen dem ersten Ende der Extenderröhre und dem zweiten Ende der Rohrauskleidung lecksicher ist;
Evertieren der Kombination aus Extenderröhre (5) und Rohrauskleidung (1) mit unter Druck stehendem Fluid, um wenigstens einen Teil des Evertierungsprozesses progressiv voranzutreiben, so dass die Extenderröhre zunächst evertiert wird und die Rohrauskleidung durch die Extenderröhre zieht, und so dass die Rohrauskleidung dann evertiert wird, wenn die Eversion der Extenderröhre abgeschlossen ist, so dass die Rohrauskleidung in einer gewünschten Position in dem ausgekleideten Rohr (4) positioniert wird; und
Lösen der Extenderröhre von der Rohrauskleidung und Entfernen der Extenderröhre von dem ausgekleideten Rohr (4).

2. Verfahren nach Anspruch 1, wobei:
die Rohrauskleidung eine Röhre aus einem absorptionsfähigen Material umfasst, imprägniert mit einem härtbaren Fluid; und
das Verfahren den Schritt, nach dem Evertierungsschritt, des Härtenlassens des härtbaren Fluids beinhaltet.

3. Verfahren nach Anspruch 2, das ferner den folgenden Schritt beinhaltet:
Abstützen der völlig evertierten Rohrauskleidung gegen eine Innenfläche des ausgekleideten Rohrs (4), während das härbare Fluid härtet.

4. Verfahren nach Anspruch 3, wobei der Abstützschritt die folgenden Schritte beinhaltet:
Positionieren einer Druckröhre (35) aus einem flexiblen Material in der Rohrauskleidung; und
Füllen der Druckröhre mit unter Druck stehendem Fluid, so dass die Druckröhre die Rohrauskleidung (1) gegen die Innenfläche des ausgekleideten Rohrs (4) presst.

5. Verfahren nach Anspruch 4, das ferner den folgenden Schritt beinhaltet:
im Wesentlichen hermetisches Abdichten der Druckröhre (35) während des Abstützschritts.

6. Verfahren nach Anspruch 4 oder 5, wobei der Schritt des Positionierens der Druckröhre in der Rohrauskleidung die folgenden Schritte beinhaltet:
Anbringen eines ersten Endes (50) der Druckröhre (35) am zweiten Ende der Rohrauskleidung, so dass die Druckröhre während des Evertierens der Rohrauskleidung in die Rohrauskleidung gezogen wird; und
Evertierenlassen des ersten Endes der Druckröhre, während des Schrittes des Füllens der Druckröhre mit unter Druck stehendem Fluid, so dass die Druckröhre die Rohrauskleidung gegen die Innenfläche des ausgekleideten Rohrs über im Wesentlichen die gesamte Länge der Rohrauskleidung presst.

7. Verfahren nach einem vorherigen Anspruch, wobei der Schritt des Anbringens der Extenderröhre (6) an der Rohrauskleidung (1) den folgenden Schritt beinhaltet:
Anbringen einer Zwischenhülse (13), die umgestülpt werden kann, zwischen dem ersten Ende der Rohrauskleidung und dem zweiten Ende der Extenderröhre.

8. Verfahren nach Anspruch 7, wobei:
die Zwischenhülse (13) elastisch ist.

9. Verfahren nach Anspruch 7 oder 8, wobei:
die Zwischenhülse (13) undurchlässig ist.

## Revendications

1. Procédé de garnissage d'une conduite (4) comprenant les étapes consistant à :
mettre à disposition une garniture de conduite tubulaire, allongée, souple (1) qui possède des première et deuxième extrémités et qui est apte à être retournée par éversion ;
mettre à disposition un tube prolongateur, allongé, sensiblement imperméable, souple (6) qui possède des première et deuxième extrémités et qui est apte à être retourné par éversion ;
**caractérisé par** le fait d'attacher la deuxième extrémité du tube prolongateur à la première extrémité de la garniture de conduite à l'aide d'un raccordement en liaison chevauchante (7) qui s'étend en continu autour de la circonférence toute entière du tube prolongateur (6) de sorte que le tube prolongateur et la garniture de conduite combinés forment une construction tubulaire continue qui est étanche aux fuites entre la première extrémité du tube prolongateur et la deuxième extrémité de la garniture de conduite ;
retourner par éversion le tube prolongateur (6) et la garniture de conduite (1) combinés en utilisant du fluide sous pression afin de piloter au moins une partie du processus de retournement par éversion de manière progressive de sorte que le tube prolongateur soit le premier à être retourné par éversion et entraîne la garniture de conduite à travers le tube prolongateur, et de sorte que la garniture de conduite soit ensuite retournée par éversion une fois que le retournement par éversion du tube prolongateur a été achevé, de sorte que la garniture de conduite se mette en position au niveau d'une position désirée dans la conduite (4) en cours de garnissage ; et
détacher le tube prolongateur de la garniture de conduite et enlever le tube prolongateur de la conduite (4) en cours de garnissage.

2. Procédé tel que revendiqué dans la revendication 1 :
la garniture de conduite comprenant un tube en matière absorbante imprégnée d'un fluide durcissable ; et
le procédé incluant l'étape, après l'étape de retournement par éversion, consistant à permettre au fluide durcissable de durcir.

3. Procédé tel que revendiqué dans la revendication 2, incluant en outre l'étape consistant à :
soutenir la garniture de conduite, entièrement retournée par éversion, contre une surface interne de la conduite (4) en cours de garnissage pendant que le fluide durcissable est en train de durcir.

4. Procédé tel que revendiqué dans la revendication 3, l'étape de soutien incluant les étapes consistant à :
positionner un tube de pression (35) en matière souple au sein du garnissage de conduite ; et
remplir le tube de pression avec du fluide sous pression de sorte que le tube de pression presse la garniture de conduite (1) contre la surface interne de la conduite (4) en cours de garnissage.

5. Procédé tel que revendiqué dans la revendication 4, comprenant en outre l'étape consistant à :
étanchéifier de manière sensiblement hermétique le tube de pression (35) pendant l'étape de soutien.

6. Procédé tel que revendiqué dans la revendication 4 ou 5, l'étape de positionnement du tube de pression au sein de la garniture de conduite comprenant les étapes consistant à :
attacher une première extrémité (50) du tube de pression (35) à la deuxième extrémité de la garniture de conduite de sorte que le tube de pression soit entraîné jusque dans la garniture de conduite au fur et à mesure que la garniture de conduite est retournée par éversion ; et
durant l'étape de remplissage du tube de pression avec du fluide sous pression, permettre que la première extrémité du tube de pression soit retournée par éversion de sorte que le tube de pression presse la garniture de conduite contre la surface interne de la conduite en cours de garnissage le long sensiblement de toute la longueur de la garniture de conduite.

7. Procédé tel que revendiqué dans une quelconque revendication précédente, l'étape d'attache du tube prolongateur (6) à la garniture de conduite (1) comprenant l'étape consistant à :
attacher un manchon intermédiaire (13) qui est apte à être retourné par éversion entre la première extrémité de la garniture de conduite et la deuxième extrémité du tube prolongateur.

8. Procédé tel que revendiqué dans la revendication 7 :
le manchon intermédiaire (13) étant élastique.

9. Procédé tel que revendiqué dans la revendication 7 ou 8 :
le manchon intermédiaire (13) étant imperméable.
